# EUROPEAN PATENT SPECIFICATION

(11) **EP 0 179 604 B1**
(45) Date of publication and mention of the grant of the patent: **12.01.1994**
(21) Application number: 85307351.8
(22) Date of filing: 14.10.1985
(51) Int. Cl.: C08G 73/10, C09D 179/08, C09J 179/08, C08J 5/24

(54) **Polyimide adhesives, coats and prepreg**
Klebstoff, Überzüge und vorimprägnierte Harzfasermatten auf Basis von Polyimiden
Adhésifs, revêtements et préimprégnés à base de polyimides

(30) Priority: 15.10.1984 JP 214350/84; 19.10.1984 JP 218598/84
(43) Date of publication of application: 30.04.1986
(73) Proprietor: MITSUI TOATSU CHEMICALS, Inc., Chiyoda-Ku Tokyo 100 (JP)
(72) Inventor: Ibi, Akira, Mobara-shi Chiba-ken (JP); Sato, Takushi, Yokohama-shi Kanagawa-ken (JP); Yamaguchi, Akihiro, Kamakura-shi Kanagawa-ken (JP); Takahashi, Shigeru, Yokohama-shi Kanagawa-ken (JP); Shishido, Shigeyuki, Kamakura-shi Kanagawa-ken (JP); Tamai, Shoji, Yokohama-shi Kanagawa-ken (JP); Nakajima, Hisae, Machida-shi Tokyo (JP)
(74) Representative: Hayward, Denis Edward Peter

(56) References cited:
- US-A- 3 870 677
- US-A- 4 094 862
- SAMPE QUATERLY, vol. 113, no. 1, October 1981, pages 20-25; A.K. ST.CLAIR et al.: "A multi-purpose thermoplastic polyimide"
- JOURNAL OF POLYMER SCIENCE: MACROMOLECULAR REVIEWS, vol. 11, 1976, pages 161-208; C.E. SROOG "Polyimides", John Wiley & Sons Inc.;

## Description

The present invention relates to polyimide powders useful as material for high temperature stable adhesives, coatings, molded parts and composites, and more particularly to the preparation and use of such powders.

Many kinds of industrial materials with good high-temperature properties are required for high performance and weight saving in the field of electronics, aeronautics and space instruments and transport machinery. Polyimides are known as improved materials suitable for these applications and are used for structural adhesives, molding materials and composites.

In J. Polymer Science: Macromolecular Reviews, Vol. 11, 1976, pages 161-208, C.E.Sroog gave a general review of polyimides and their properties as known at the time, saying inter alia that they were normally prepared by imidising polyamic-acids either thermally, or chemically using an imidising agent.

Conventional polyimides, however, are difficult to use because the melt flowability becomes very low once the material has reached the stage of containing polyimide as the major component after almost complete cyclisation, although the polyamic-acid precursor is flowable when melted.

The melt flowability increases in the presence of solvents or polyamic-acids. Evaporation of the residual solvents or the moisture generated by the cyclisation of amic-acid groups, however, causes voids in the material and a reduction in its desirable properties when the solvent removal and imidisation is subsequently performed.

The National Aeronautics and Space Adminstration (NASA) has developed new polyimides having improved melt flowability by heat-imidising, at a temperature such as 230°C, the polyamic-acids which are obtained by reacting tetracarboxylic acid dianhydrides such as 3,3',4,4'-benzophenone tetracarboxylic acid dianhydride, pyromellitic dianhydride etc., with diamines such as 3,3'-diaminobenzophenone etc. in organic solvents (for example, USP 4,065,345; USP 4,094,862), and a variety of applications of these materials were reported in SAMPE Quarterly, p.20-25 (October 1981).

It was also reported that the same polyamic acid solutions could be spun into synthetic fibres and then imidised by soaking for a long period (24 hours) in a 50/50 pyridine/acetic anhydride solution, but no unusual melt flowability was mentioned in that case.

An object of this invention is to provide a method of preparing polyimide powders which are further improved in melt flowability and other desirable properties and can be widely used for high-temperature stable adhesives and/or coatings. Another object of this invention is to provide a method for adhesion and coating formation, using such polyimide powders.

Still another object of the invention is to apply the technology in a method for preparing a prepreg, bonding by use of the prepreg, and preparing molded laminates of the prepreg.

According to the present invention, there is provided a method for preparing a polyimide powder with melt-flowability for use as an adhesive and/or in forming coatings and/or in forming prepregs, which comprises:
(a) subjecting to imidization conditions a solution in an organic solvent of a polyamic-acid which has an inherent viscosity of 0.1 - 3.0 dl/g (as measured at 35°C by dissolving 0.5 g of the polyamic-acid in 100 ml of N,N-dimethylacetamide) and which is derived from 3,3'-diaminobenzophenone and 3,3',4,4'-benzophenonetetracarboxylic dianhydride and which consists of recurring units of the formula (I): 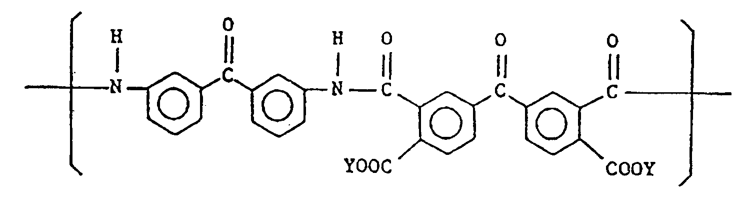 wherein Y is hydrogen, alklyl or aryl,
   to obtain a polyimide consisting of recurring units of the formula (II): 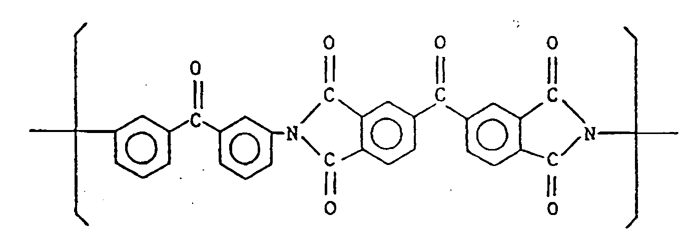
(b) separating the resulting polyimide of formula (II) from said organic solvent, and
(c) drying to obtain polyimide powder,
characterized in that, in step (a), said polyamic-acid of formula (I) is chemically imidized by reacting said solution thereof with an imidizing agent, the ratio of imidizing agent to the carboxyl groups of polyamic acid being 0,8 - 4.

The invention also provides a method for adhesion with polyimide powder, which comprises applying the polyimide powder product of the method just described to an adherend surface, assembling together the treated surface with an untreated or similarly treated surface of another adherend, and heating under pressure to a temperature above the glass transition temperature of the polyimide powder.

The invention further provides a method of forming a coating with a polyimide powder, which comprises applying the polyimide powder product of said method according to the invention to a substrate surface, and heating to a temperature above the glass transition temperature of the polyimide so that the powder melts to form a coating on the substrate.

The invention further provides a method for preparing prepreg using a polyimide powder, which comprises applying the polyimide powder product of the method according to the invention to a fibrous reinforcing material, and heating to a temperature above the glass transition temperature of the polyimide so that the polyimide powder melts and impregnates the fibrous reinforcing material.

Techniques according to the invention will now be described in more detail by way of example.

Firstly, an organic solvent solution of the polyamic-acid of formula (I) is prepared. This is obtained by the known method of reacting 3,3',4,4'-benzophenonetetracarboxylic dianhydride (hereinafter abbreviated as BDTA) with 3,3'-diaminobenzophenone (hereinafter abbreviated as 3,3'-DABP) in an organic solvent. For example, the diamine is dissolved or suspended in the organic solvent and the tetracarboxylic acid dianhydride is gradually added under a dry nitrogren atmosphere, or vice versa.

Organic solvents which are suitable for use in this invention include, for example, N,N'-dimethylacetamide, N,N'-dimethylformamide, hexamethylphosphoramide, 1,3-dimethyl-2-imidazolidinone, N-methyl-2-pyrrolidone, diethyleneglycol, dimethylether and dimethylsulfoxide. Polar non-proton solvents such as N,N'-dimethylacetamide are preferred from the point of view of the imidizing reaction. These solvents can be used alone or in combination.

A resulting polyamic-acid solution having a polymer content of 2 - 50% by weight, preferably 4 - 45% by weight, or a Brookfield viscosity of 1 x 10⁻² to 50 Pa·s, preferably 5 x 10⁻² to 40 Pa·s, is suitable for ease of handling.

Polyamic-acids of formula (I) having an inherent viscosity in the range of 0.1 - 3.0 dl/g, preferably 0.2 - 2.0 dl/g, are suitable in regard to mechanical strength, melt flowability, and high-temperature stability of the polyimides. The inherent viscosity is measured at 35°C by dissolving 0.5 gram of the polyamic-acid in 100 ml of N,N-dimethylacetamide.

Secondly, the resulting organic solvent solution of polyamic-acid is reacted with the chemical imidizing agent, which agents include, for example, acetic acid anhydride, proprionic acid anhydride, isobutyric acid anhydride and butyric acid anhydride. These agents can be used alone or in mixtures of two of more.

There are principally two processes of chemical imidization. In the first process, the imidizing agent is added into the polyamic-acid solution. In the second process, the polyamic-acid solution is, instead, added into the imidizing agent. Other processes may also be used.

In the first process, wherein the imidizing agent is added into the polyamic-acid, a suitable temperature of addition is -10°C - 150°C. The imidizing agent may be added directly into the polyamic-acid or may be added after being diluted with organic solvent. The ratio of imidizing agent to the carboxyl groups of polyamic-acid is preferably 1 - 2 equivalents.

The agent may also be added simultaneously with an imidizing catalyst. Such catalysts include, for example, tertiary amines such as, trimethylamine, triethylamine, tributylamine, pyridine, α-picoline, β-picoline, γ-picoline, and lutidine. The ratio of the catalyst to the carboxyl groups of the polyamic-acid is 0.05 - 1.5 equivalents and preferably 0.2 - 1 equivalents.

The imidization proceeds by adding the imidizing agent into the polyamic-acid solution with stirring. After the addition is finished, the stirring is further continued to separate the polyimide. The precipitate is filtered, and thoroughly washed with water and/or organic solvents, followed by drying at elevated temperature to obtain the polyimide powder.

In the second process wherein the polyamic-acid solution is added into the imidizing agent, the same imidizing agents and catalysts can be used as in the first process. When adding the polyamic-acid solution, the imidizing agent is preferably stirred.

The ratio of the imidizing agent to the carboxyl groups of the polyamic-acid is preferably one equivalent or more. The agent may be diluted with organic solvent as in the first process. The separated polyimide is treated as in the first process and obtained as a powder.

No difficulty is caused by the presence in the polyimide of residual non-cyclized amic-acid groups in a range of quantities which has no effect on the properties, or by the presence of polyimide segments not resulting from the chemical imidization.

Residual volatiles in the polyimide powder preferably should be reduced, because they cause troubles such as generation of blisters in the following stages of molding, bonding or coating formation. The volatiles should normally be 12% by weight or less.

The resulting powder of polyimide of formula (II) is pale yellow and is widely applicable as a material for adhesives, coating, molding and laminates.

It can be easily molded to obtain desired articles by heating under pressure above the glass transition temperature of the polyimide.

Stabilizers, pigments, plasticizers, lubricants and flame retardants may be added in a range of quantities having no adverse effect on the polyimide properties.

A polyimide powder of formula (II) can, of course, be prepared by thermally imidizing the polyamic-acid of formula (I), as in the prior art discussed supra. However, the desired excellent melt flowability, high-temperature stability and adhesive strength are only achieved by combination of the specified polyamic-acid and chemical imidization with an imidizing agent.

The polyimide powder is useful for high-temperature stable adhesives. Bonding is performed by applying the polyimide powder onto the adherend surface to form an adhesive layer, assembling together the treated surface with the untreated or treated surface of another adherend, and heating under pressure. The polyimide powder can be applied by known methods, for example, direct scattering of the powder on the adherend surface with a spoon, or the use of an electrostatic process for uniform application. The polyimide powder can also be applied by suspending it in a solvent such as water, acetone, methanol, ethanol, propanol, benzene, xylene and other conventional solvents. When a solvent is used, it is preferred to remove the solvent before bonding the treated substrate.

Heating above the glass transition temperature of the polyimide is needed for the bonding, to obtain a high adhesive strength. The range of temperatures which is suitable for the bonding is 180 - 450°C and preferably 250 - 400°C. The heating and pressing may be by known processes such as hot pressing, hot rolling, high-frequency induction heating, double-belt pressing and autoclaving. A bonding pressure in the range of 0 - 500 kg/cm² is preferred.

High adhesive strength can also be obtained by applying the polyimide powder, heating and melting to form a polyimide film before bonding. This process is preferable because the volatiles are more completely removed from the polyimide adhesive layer.

The bonded products thus obtained retain the high adhesive strength even at high temperatures.

In addition, a polyimide coating can be formed by applying the polyimide powder to a substrate surface, heating and melting. The resulting coating can be used for heat resistant coated films and also for the adhesive as described hereinbefore.

A polyimide coating can, of course, be prepared by applying a polyamic-acid solution and heating to remove volatiles and to produce thermal imidization, as in the prior art discussed supra. In the present method of chemical imidization, however, almost no volatiles are contained in the polyimide powder and thus foaming does not occur even on rapid heating. It is also advantageous that a thick film can be prepared in one operation.

A prepreg according to the present invention can be prepared by applying the polyimide powder to fibrous reinforcing material, and heating to melt the polyimide so that the reinforcing material is impregnated with the polyimide.

Typlical fibrous reinforcing materials are glass fibers, carbon fibers, boron fibers, alumina fibers, polyamide fibers, and their textiles and non woven fabrics. These fibrous reinforcing materials can be used alone or in combination. Other reinforcing materials such as silicone carbide fibers, mica, calcium silicate, silica and alumina can also be used, when needed, in combination with the fibers described hereinbefore.

Although the polyimide powder can be directly applied to the fibrous reinforcing material, easier to operate is the method of application by suspension in an organic solvent.

The polyimide powder is heated above the glass transition temperature of the polyimide and suitably at a temperature of 240 - 360°C.

The method can be used to prepare a prepreg wherein the fibrous material is thoroughly impregnated with the polyimide. The prepreg thus obtained preferably has a polymer content of 20 - 80% by weight.

The method of this invention wherein the chemically-imidized polyimide powder is applied to the fibrous reinforcing material, and heated and melted to impregnate the fibrous material with the polyimide, has the following advantages as compared with the conventional process wherein the fibrous material is impregnated with a polyamic-acid solution, followed by heating to remove the solvents and to imidize the polymer. In the method of this invention, there exists almost no solvents and hence the fibrous material can be impregnated with a large quantity of the polyimide in one operation, with no need for repeats of the impregnation procedure. No troubles such as foaming are found on heating the prepreg. Since a prepreg containing almost no volatiles can be prepared, this eliminates blisters in the following stage of lamination molding or bonding. Furthermore, the polyimide has better melt flowability than that contained in a prepreg which has been impregnated with polyamic-acid followed by thermal imidizing, which makes the prepreg of this invention preferable for use in molded laminates and as sheet adhesive.

The molded laminate can be prepared by stacking up prepregs thus obtained and heating under pressure. The laminating temperature is above the glass transition temperature of the polyimide contained in the prepreg and preferably 240 - 360°C. The pressure is dependent upon the shape of the product and preferably 1 - 500 kg/cm².

The prepreg can be stored at room temperature. It is easy to process and products of any shape can be prepared by the use of conventional machines such as hot presses and autoclaves.

The prepreg is also useful as an adhesive sheet. Bonding is carried out by inserting the prepreg between the adherends and heating under pressure. The bonding pressure is 0 - 500 kg/cm² and a range of 0.1 - 20 kg/cm² is particularly preferred. The bonding temperature is above the glass transition temperature of the polyimide contained in the prepreg and preferably 240 - 360°C.

The method of heating under pressure can be carried out by known machines such as hot presses, hot rolls, high-frequency induction heating machines, double-belt presses, autoclaves etc. The bonded products thus obtained have excellent adhesive strengths even at high temperatures.

The invention will be further illustrated by means of the following Specific Examples and Comparative Examples.

### Specific and Comparative Examples

### Specific Example 1

### (a) Polymerization

A 500 ml four necked flask was charged with 300 ml of N,N-dimethylacetamide and 31.85 grams (0.15 mole) of 3,3'-DABP. The solution was stirred in a dry nitrogen atmosphere at 15°C and 48.33 grams (0.15 mole) of BTDA powder were gradually added. The viscosity of the solution increased with the addition of the BTDA. After the addition was finished, the stirring was further continued for 4 hours. The resulting polyamic-acid solution was pale brown and transparent, and the inherent viscosity of the polyamic-acid was 0.73 dl/g at 35°C.

### (b) Imidization and molding

A solution composed of 45.94 grams (0.45 mol) of acetic acid anhydride, 8.4 grams (0.09 mole) of β-picoline and 40 grams of N,N-dimethylacetamide was dropped with stirring under a dry nitrogen atmosphere at 20°C into the polyamic-acid solution obtained in (a). After the end of the dropping, the resulting solution was further stirred for 6 hours to separate pale yellow polyimide, as a polyimide slurry. The slurry was filtered, washed with water and methanol, and dried in vacuum at 120°C to obtain polyimide powder. The 5% weight loss of the polyimide powder was 548°C.

The polyimide powder was molded in a hydraulic press at 350°C with a pressure of 300 kg/cm². The molded product was dark brown, transparent, and tough. The product had a tensile strength of 9.5 kg/mm² at 23°C in accordance with ASTM D-638, a flexural strength of 13 kg/mm² at 23°C in accordance with ASTM D-790, and a notched izod impact strength of 3.8 kg. cm/cm² at 23°C in accordance with ASTM D-256.

### (c) Adhesion test

The polyimide powder obtained in (b) was applied on one side of a cold-rolled steel panel (JIS G-3141, SPCC, SD, 1.6 x 25 x 100 mm dimension). The treated surface of the panel was assembled together with an untreated surface of another panel and bonded with a pressure of 5 kg/cm² at 330°C. The lap shear strength of adhesion was 285 kg/cm² at room temperature and 203 kg/cm² at 250°C in accordance with JIS K-6848 and K-6850.

### (d) Coating formation and adhesion test

The polyimide powder obtained in (b) was applied on a cold-rolled steel sheet (JIS G-3141, SPCC, SD, 0.5 x 25 x 150 mm dimension), heated up to 295°C and melted. The procedure was repeated twice to form a polyimide coat having a thickness of about 250 µm.

The treated surface of the sheet was assembled together with an untreated surface of another sheet and bonded with a pressure of 5 kg/cm² at 330°C. The 180° peel strength obtained was 19 kg/25 mm at room temperature and 13.5 kg/25 mm at 250°C in accordance with JIS K-6848 and K-6854.

### Comparative Example 1

### (a) Preparation of thermally imidised polyimide powder

The polymerising method of Specific Example 1 (a) was used to prepare the same polyamic-acid solution. The inherent viscosity was 0.73 dl/g at 35°C. The polyamic-acid solution was poured into water with vigorous stirring to separate polyamic-acid. The white powder was thermally imidised by heating in vacuum at 230°C for 12 hours. The 5% weight loss temperature of the polyimide powder was 551°C.

The polyimide powder was molded as described in Specific Example 1. The molded product had a tensile strength of 4.9 kg/mm² at 23°C, a flexural strength of 6.9 kg/mm² at 23°C, and a notched izod impact strength of 2.0 kg/cm/cm² at 23°C. These properties were inferior to those of the product of the present invention.

### (b) Adhesion tests

The procedure of Specific Example 1 (c) was used for adhesion tests. The lap shear adhesive strength was 108 kg/cm² at room temperature and 95 kg/cm² at 250°C, which was remarkably inferior to those obtained by the method of this invention.

### Specific Example 2

### (a) Polymerisation

A 500 ml four necked flask was charged with 300 ml of N,N-dimethylacetamide and 31.8 grams (0.15 mole) of 3,3'-DABP. The solution was stirred in a dry nitrogen atmosphere at 15°C and 48.33 grams (0.15 mole) of BTDA powder were gradually added. The viscosity of the solution increased with the addition of the BTDA. After the addition was finished, the stirring was further continued for 4 hours. The resulting polyamic-acid solution was pale brown and transparent, and had an inherent viscosity of 0.69 dl/g at 35°C.

### (b) Preparation of polyimide powder

A solution composed of 45.94 grams (0.45 mole) of acetic acid anhydride, 8.4 grams (0.09 mole) of β-picoline and 40 grams of N,N-dimethylacetamide was dropped with stirring in a dry nitrogen atmosphere at 20°C into the polyamic-acid solution obtained in (a). After the end of dropping, the resulting solution was further stirred for 6 hours to separate pale yellow polyimide. The polyimide was filtered from the solvent and imidising agent, washed with water and methanol, and dried in vacuum at 120°C.

### (c) Impregnation

The polyimide powder obtained in (b) was applied on glass fabric (WF-230 from Nitto Boseki). The fabric was heated up to 295°C, and the powder was melted and impregnated the fabric to obtain a polyimide-impregnated prepreg.

### (d) Adhesion test

The resulting prepreg was inserted between a pair of cold-rolled steel panels (JIS G-3141, SPCC, SD, 1.6 x 25 x 100 mm dimension) and the panels were bonded with a pressure of 5 kg/cm² at 340°C. The lap shear strength of adhesion was 270 kg/cm² at room temperature.

### (e) Molding

The prepreg obtained in (c) was molded in a hydraulic press at 350°C with a pressure of 100 kg/cm². The resulting molded product was brown, perspective and tough. The product had a tensile strength of 10.6 kg/mm² at 23°C, a flexural strength of 14.3 kg/mm² at 23°C, and a notched izod impact strength of 4.2 kg cm/cm² at 23°C.

### Comparative Example 2

The procedure of Specific Example 2 was used to prepare the same polyamic-acid solution having an inherent viscosity of 0.69 dl/g at 35°C by reacting 3,3'-DABP with BTDA. N.N-dimethlyacetamide was added to the solution so as to obtain 8% by weight of resin content. Glass fabric was dipped into the solution thus obtained and allowed to dry in air. This procedure was repeated three times to obtain a polyamic-acid impregnated prepreg. The prepreg obtained was dried at 100°C for 1 hour, at 150°C for 1 hour, at 180°C for 1 hour, and at 220°C for 3 hours to perform imidisation and removal of volatile matter, which resulted in a polyimide impregnated prepreg.

### (a) Molding

The resulting prepreg was laminated and molded by using the procedure in Specific Example 2(e). The molded product had a tensile strength of 6.1 kg/mm² at 23°C, a flexural strength of 7.0 kg/mm² at 23°C, a notched izod impact strength of 2.4 kg.cm/cm² at 23°C. These properties were inferior to those of Specific Example 2.

### (b) Adhesion test

The procedure of Specific Example 2(d) was used for adhesion tests on the prepreg of the present Example. The lap shear adhesive strength of the adherend obtained was 101 kg/cm² at room temperature, which was less than half that of Specific Example 2.

## Claims

1. A method for preparing a polyimide powder with melt-flowability for use as an adhesive and/or in forming coatings and/or in forming prepregs, which comprises:
(a) subjecting to imidization conditions a solution in an organic solvent of a polyamic-acid which has an inherent viscosity of 0.1 - 3.0 dl/g (as measured at 35°C by dissolving 0.5 g of the polyamic-acid in 100 ml of N,N-dimethylacetamide) and which is derived from 3,3'-diaminobenzophenone and 3,3',4,4'-benzophenonetetracarboxylic dianhydride and which consists of recurring units of the formula (I): 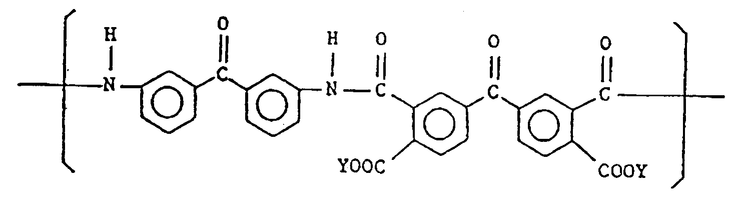 wherein Y is hydrogen, alklyl or aryl,
to obtain a polyimide consisting of recurring units of the formula (II): 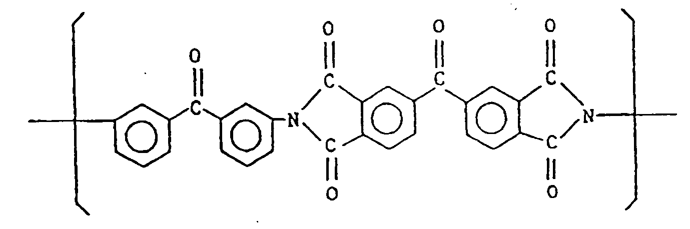
(b) separating the resulting polyimide of formula (II) from said organic solvent, and
(c) drying to obtain polyimide powder,
characterized in that, in step (a), said polyamic-acid of formula (I) is chemically imidized by reacting said solution thereof with an imidizing agent, the ratio of imidizing agent to the carboxyl groups of polyamic acid being 0,8 - 4.

2. A method according to Claim 1, wherein said imidizing agent is one or more of acetic acid anhydride, propionic acid anhydride, isobutyric acid anhydride, and butyric acid anhydride.

3. A method for adhesion with polyimide powder, which comprises applying the polyimide powder product of Claim 1 or Claim 2 to an adherend surface, assembling together the treated surface with an untreated or similarly treated surface of another adherend, and heating under pressure to a temperature above the glass transition temperature of the polyimide powder.

4. A method of forming a coating with a polyimide powder which comprises applying the polyimide powder product of Claim 1 or Claim 2 to a substrate surface, and heating to a temperature above the glass transition temperature of the polyimide so that the powder melts to form a coating on the substrate.

5. A method for preparing prepreg using a polyimide powder, which comprises applying the polyimide powder product of Claim 1 or Claim 2 to a fibrous reinforcing material, and heating to a temperature above the glass transition temperature of the polyimide so that the polyimide powder melts and impregnates the fibrous reinforcing material.

6. A method according to Claim 5, wherein prior to the application of said polyimide powder the fibrous reinforcing material is impregnated with a solution containing polyamic-acid and the polyamic-acid is thermally or chemically imidised.

7. A method for preparing a molded laminate which comprises stacking up layers of the prepreg product of Claim 5 or Claim 6, and heating under pressure to a temperature above the glass transition temperature of the polyimide contained in said prepreg.

8. A method for adhesion which comprises inserting a sheet of the prepreg product of Claim 5 or Claim 6 between adherends, and heating under pressure to a temperature above the glass transition temperature of the polyimide contained in said prepreg.

## Patentansprüche

1. Verfahren zum Herstellen eines Polyimidpulvers mit Schmelz-Fließfähigkeit zur Verwendung als Klebemittel und/oder bei der Bildung von Beschichtungen und/oder bei der Bildung von Vorimprägnierungsmitteln, das umfaßt:
(a) Bringen einer Lösung in Imidisierbedingungen in einem organischen Lösungsmittel einer Polyamic-Säure, die eine innere Viskosität von 0,1 bis 3,0 dl/g aufweist (bei 35°C durch Auflösen von 0,5 g Polyamic-Säure in 100 ml N,N-Dimethylacetamid gemessen) und die von 3,3'-Diaminobenzophenon und 3,3',4,4'-Benzophenon-Tetracarboxyldianhydrid abgeleitet ist und die wiederkehrende Einheiten der Formel (I) aufweist: 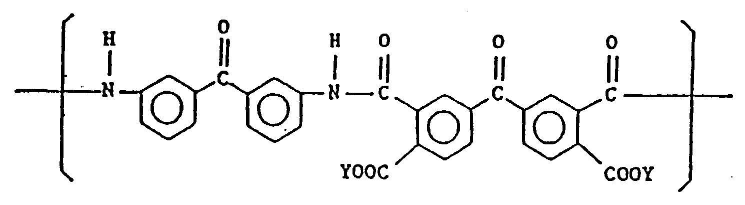 worin Y Wasserstoff, ein Alkyl oder ein Aryl ist, um ein Polyimid zu erhalten, das wiederkehrende Einheiten der Formel (II) aufweist: 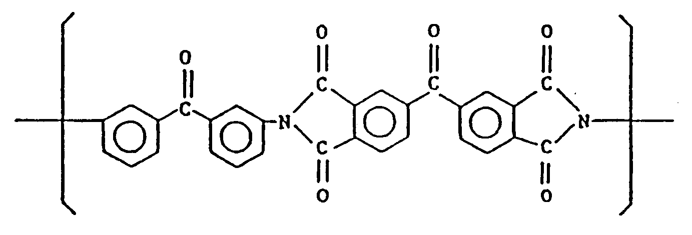
(b) Trennen des resultierenden Polyimids der Formel (II) von besagtem organischem Lösungsmittel, und
(c) Trocknen zum Erhalten des Polyimidpulvers,
dadurch gekennzeichnet, daß in Schritt (a) besagte Polyamic-Säure durch Reaktion der besagten Lösung mit einem Imidisiermittel imidisiert wird, wobei das Verhältnis des Imidisiermittels zu den Carboxyl-Gruppen der Polyamic-Säure 0,8 bis 4 beträgt.

2. Verfahren nach Anspruch 1,
dadurch gekennzeichnet, daß besagtes Imidisiermittel eines oder mehrere von Acetsäureanhydrid, Propionsäureanhydrid, Isobutyric-Säureanhydrid und Butyric-Säureanhydrid ist.

3. Verfahren zum Kleben mit Polyimidpulver,
dadurch gekennzeichnet, daß es umfaßt: Aufbringen des Polyimidpulver-Produkts nach den Ansprüchen 1 oder 2 auf eine Klebefläche, Zusammenbringen der behandelten Fläche mit einer unbehandelten oder ähnlich behandelten anderen Klebefläche und Erwärmen unter Druck auf eine Temperatur oberhalb der Glasübergangstemperatur des Polyimidpulvers.

4. Verfahren zum Bilden einer Beschichtung mit einem Polyimidpulver,
dadurch gekennzeichnet, daß es umfaßt: Aufbringen des Polyimidpulver-Produkts nach den Ansprüchen 1 oder 2 auf eine Substratfläche und Erwärmen auf eine Temperatur oberhalb der Glasübergangstemperatur des Polyimidpulvers, so daß das Pulver schmilzt und eine Beschichtung auf dem Substrat bildet.

5. Verfahren zum Bilden eines Vorimprägnierungsmittels mit einem Polyimidpulver,
dadurch gekennzeichnet, daß es umfaßt: Aufbringen des Polyimidpulver-Produkts nach den Ansprüchen 1 oder 2 auf ein faserförmiges Verstärkungsmaterial und Erwärmen auf eine Temperatur oberhalb der Glasübergangstemperatur des Polyimidpulvers, so daß das Polyimidpulver schmilzt und das faserförmige Verstärkungsmaterial imprägniert.

6. Verfahren nach Anspruch 5,
dadurch gekennzeichnet, daß vor dem Aufbringen des besagten Polyimidpulvers das faserförmige Verstärkungsmaterial mit einer Polyamic-Säure enthaltenden Lösung imprägniert wird und die Polyamic-Säure thermisch oder chemisch imidisiert wird.

7. Verfahren zum Herstellen eines gegossenen Laminats, dadurch gekennzeichnet, daß es umfaßt: Aufeinanderstapeln von Lagen des Vorimprägnierungsmittel-Produkts nach Anspruch 5 oder 6 und Erwärmen auf eine Temperatur oberhalb der Glasübergangstemperatur des in besagtem Vorimprägnierungsmittel enthaltenen Polyimids.

8. Verfahren zum Kleben,
dadurch gekennzeichnet, daß es umfaßt: Einfügen einer Bahn des Vorimprägnierungsmittels nach Anspruch 5 oder 6 zwischen Klebeflächen und Erwärmen auf eine Temperatur oberhalb der Glasübergangstemperatur des in besagtem Vorimprägnierungsmittel enthaltenen Polyimids.

## Revendications

1. Procédé de préparation d'une poudre de polyimide fluide à l'état fondu destiné à être utilisé comme adhésif et/ou dans la formation de revêtement et/ou dans la formation de préimprégnés, qui comprend:
(a) la soumission à des conditions d'imidisation d'une solution dans un solvant organique d'un acide polyamique qui présente une viscosité inhérente de 0,1 à 3,0 dl/g (mesurée à 35°C par dissolution de 0,5 g d'acide polyamique dans 100 ml de N,N'-diméthylacétamide) et qui est dérivé de la 3,3'-diaminobenzophénone et du dianhydride de l'acide 3,3',4,4'-benzophénone tétracarboxylique et qui se compose des motifs récurrents de formule (I): 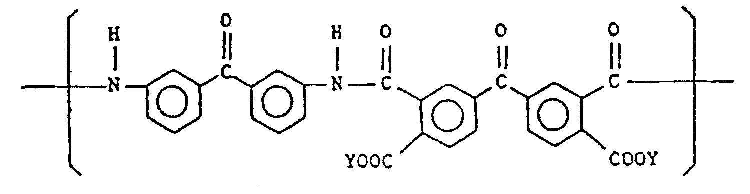 dans laquelle Y représente l'hydrogène, un groupe alkyle ou un groupe aryle,
pour obtenir un polyimide se composant des motifs récurrents de formule (II): 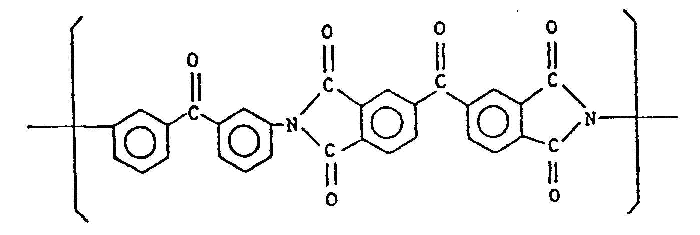
(b) la séparation du polyimide de formule (II) obtenu du solvant organique, et
(c) le séchage pour obtenir une poudre de polyimide,
caractérisé en ce que dans l'étape (a) l'acide polyamique de formule (I) est imidisé par voie chimique en faisant réagir la solution de ce dernier avec un agent d'imidisation, le rapport de l'agent d'imidisation aux groupes carboxyle de l'acide polyamique allant de 0,8 à 4.

2. Procédé selon la revendication 1, dans lequel l'agent d'imidisation étant un ou plusieurs anhydrides de l'acide acétique, de l'acide propionique, de l'acide isobutyrique et de l'acide butyrique.

3. Procédé d'adhésion avec une poudre de polyimide, qui comprend l'application d'une poudre de polyimide de la revendication 1 ou de la revendication 2 à une surface à faire adhérer, l'assemblage de la surface traitée avec une surface non traitée ou une surface traitée de façon similaire d'une autre surface à faire adhérer, et le chauffage sous pression à une température supérieure à la température de transition vitreuse de la poudre de polyimide.

4. Procédé de formation d'un revêtement avec une poudre de polyimide qui comprend l'application de la poudre de polyimide obtenue de la revendication 1 ou de la revendication 2 sur une surface de substrat, et le chauffage à une température supérieure à la température de transition vitreuse de la poudre de polyimide de façon à faire fondre la poudre pour former un revêtement sur le substrat.

5. Procédé de préparation d'un préimprégné utilisant une poudre de polyimide, qui comprend l'application de la poudre de polyimide de la revendication 1 ou de la revendication 2 à un matériau de renforcement fibreux, et le chauffage à une température supérieure à la température de transition vitreuse du polyimide de façon à fondre la poudre de polyimide et à imprégner le matériau de renforcement fibreux.

6. Procédé selon la revendication 5, selon lequel avant l'application de la poudre de polyimide le matériau de renforcement fibreux est imprégné avec une solution contenant un acide polyamique, ce dernier étant imidisé par voie thermique ou chimique.

7. Procédé de préparation d'un lamifié moulé qui comprend la projection de couches du produit préimprégné de la revendication 5 ou de la revendication 6, et le chauffage au dessus de la température de transition vitreuse du polyimide contenu dans le préimprégné.

8. Procédé d'adhésion qui comprend l'insertion d'une feuille de produit préimprégné de la revendication 5 ou de la revendication 6, entre des surfaces à faire adhérer, et le chauffage à une température supérieure à la température de transition vitreuse du polyimide contenu dans le préimprégné.
